# FASCICULE DE BREVET EUROPEEN

(11) **EP 4 153 796 B1**
(45) Date de publication et mention de la délivrance du brevet: **08.05.2024**
(21) Numéro de dépôt: 21728021.3
(22) Date de dépôt: 19.05.2021
(51) Int. Cl.: C23F 3/03, B33Y 40/20, B22F 10/62

(54) **BAIN DE POLISSAGE CHIMIQUE POUR ALUMINIUM ET ALLIAGES D'ALUMINIUM, ET PROCÉDÉ UTILISANT UN TEL BAIN**
BAD ZUM CHEMISCHEN POLIEREN VON ALUMINIUM UND ALUMINIUMLEGIERUNGEN UND VERFAHREN ZUR VERWENDUNG EINES SOLCHEN BADES
CHEMICAL POLISHING BATH FOR ALUMINUM AND ALUMINUM ALLOYS, AND METHOD USING SUCH A BATH

(30) Priorité: 20.05.2020 FR 2005136
(43) Date de publication de la demande: 29.03.2023
(73) Titulaire: Institut de Recherche Technologique Matériaux, Métallurgie, Procédés, 57070 Metz (FR)
(72) Inventeur: FRAYRET, Jérôme, 34270 LE TRIADOU (FR); TARDELLI, Joffrey, 57310 BERTRANGE (FR); EXBRAYAT, Loïc, 67400 ILLKIRCH GRAFFENSTADEN (FR)
(74) Mandataire: Office Freylinger
(86) Numéro de dépôt international: PCT/EP2021/063294
(87) Numéro de publication internationale: WO 2021/234001

(56) Documents cités:
- CN-B- 106 757 039
- FR-A- 1 093 415
- US-A- 4 530 735

## Description

### Domaine technique

La présente invention concerne généralement le domaine du traitement de surface de pièces en aluminium ou en alliage d'aluminium, et notamment le domaine du polissage de pièces en aluminium ou en alliage d'aluminium. L'invention est particulièrement destinée au polissage des pièces réalisées par fabrication additive.

### Etat de la technique

La fabrication additive ou impression 3D constitue un axe majeur de la R&D en France et dans le monde permettant de produire des pièces polymères ou métalliques tridimensionnelles à partir de poudres. De par le mode d'élaboration par fusions successives de poudres, les procédés de fabrication additive permettent de produire des pièces de géométries complexes mais également d'envisager la production de nouvelles nuances d'alliages non accessibles par métallurgie traditionnelle tout en limitant les quantités de matière première nécessaires. La fabrication additive est une technologie particulièrement intéressante pour les industries aérospatiales, automobiles ou navales dans l'optique d'améliorer la performance et l'allégement des structures. Cependant, les procédés de fabrication additive dits sur lit de poudre conduisent intrinsèquement à la création de pièces dont l'état de surface final présente les stigmates d'une élaboration à partir de poudres avec, en particulier, des rugosités de surface (exprimée par le paramètre Ra) comprises entre 5 et 25 µm selon les procédés, soit sensiblement supérieure à la rugosité d'une pièce usinée (de l'ordre de quelques microns). D'autre part, les pièces produites sont généralement caractérisées par la présence de particules partiellement fondues en extrême surface pouvant présenter un risque de détachement en service et dégrader ainsi les performances de ces pièces (obturation de canalisations, entrainement de particules dans les systèmes hydrauliques, diminution des propriétés mécaniques statiques et dynamiques,...).

Il est donc nécessaire de diminuer la rugosité des pièces issues de fabrication additive, mais également d'éliminer les irrégularités de surface et prévenir ainsi le risque de décollement de particules/corps étrangers de la surface en service, qui pourrait générer des problèmes fonctionnels en lien avec l'utilisation de ces pièces. L'amélioration de l'état de surface des pièces produites pourra également permettre d'améliorer certaines performances en termes de résistance à la fatigue et à la corrosion, ou encore d'écoulement sur les surfaces pour les applications hydrauliques.

Aujourd'hui, une telle étape de post-traitement représente un verrou technologique majeur pour le développement de pièces métalliques fonctionnelles issues de fabrication additive à caractéristiques maîtrisées et reproductibles.

Différents procédés de polissage existent tels que l'électropolissage ou le polissage plasma ou laser mais ces procédés nécessitent l'utilisation de courant voire de lasers avec un coût induit élevé. De plus l'utilisation de laser ou le travail avec des intensités électriques élevées nécessitent une protection particulière des opérateurs. Enfin ces procédés complexes ont besoin d'une maîtrise fine de leurs paramètres. Concernant les bains d'électropolissage, ils sont aussi difficiles à gérer car ils sont très hygroscopiques et des étapes de déshydratation sont nécessaires périodiquement.

Les procédés de polissage dits chimiques consistant à immerger la pièce à traiter dans un bain, appelé bain de polissage chimique, contenant des composés acides ou basiques ainsi que des agents oxydants, sans application d'un courant électrique ou d'un laser, sont plus simples à mettre en oeuvre.

Deux exemples de bains de polissage pour pièces en aluminium sont décrits dans l'article « Chemical polishing of aluminium coupons in support of vacuum chambers » de Skubal, L. R. and Walters, D. R., dans Vaccum, Elsevier Ltd, (2013) 96, pp. 1-6. Doi: 10.1016/j.vacuum.2013.03.002. Le premier bain comprend 50 mL d'acide nitrique, 250 mL d'acide sulfurique et d'acide phosphorique, et 3 g de sulfate de nickel. Le deuxième bain comprend 60 mL d'acide nitrique, 750 mL d'acide sulfurique et 160 mL d'acide phosphorique, et 2,5 g de nitrate de cuivre.

D'autres bains de polissage chimique sont connus de l'article « Le polissage chimique de l'aluminium et de ses alliages » par J. HERENGUEL et R. SECOND, REVUE DE METALLURGIE. XLVIII. N° 4. 1951, p1-5. Les solutions de polissage proposées contiennent 80 à 95% massique d'acide phosphorique et sulfurique, avec 3 à 10% massique d'acide nitrique, à des températures entre 85 et 120°C. L'état de surface obtenu est excellent, mais les temps de traitement sont très courts, de 30 s à 1 min.

Le US 3,425,881 décrit une solution dite de polissage, mais qui se rapproche davantage du 'brillantage', c'est-à-dire dont l'objectif est de lisser les bosses et d'avoir un rendu brillant. Le bain comprend de l'acide sulfurique et phosphorique, de l'acide nitrique, du cuivre, de l'ammoniac et de l'aluminium.

Des exemples de bain de polissage pour pièces en aluminium sont décrits dans les CN 106757039 B, US 4530735 A et FR 1093415 A.

L'objectif de l'invention est de fournir un bain de polissage pour pièces aluminium qui permette d'obtenir une surface présentant une rugosité moyenne (Ra) inférieure à 5 µm et un enlèvement de matière limité, typiquement moins de 300 µm.

### Description générale de l'invention

Avec cet objectif en tête, la présente invention concerne un bain de polissage chimique pour pièces en aluminium et alliages d'aluminium, et un procédé utilisant un tel bain.

Le polissage chimique a pour objectif de réduire la rugosité de surface d'une pièce métallique, par le biais d'une opération de dissolution sélective d'une couche de matière d'épaisseur variable, pouvant aller de la dizaine de nanomètre à plusieurs dizaines de micromètres. Cet enlèvement de matière se fait par voie chimique, en employant des réactifs qui peuvent être de nature acides ou basiques, mais également posséder des propriétés oxydantes. Il est à noter que la dissolution provoquée par le procédé de polissage chimique a un impact direct sur l'aspect dimensionnel de la pièce même si cela n'est pas l'objectif recherché, ce qui le différencie du procédé d'usinage chimique dont le seul objectif est de réduire les côtes de la pièce (plusieurs dizaines ou centaines de microns), de sorte d'atteindre une valeur cible.

Le principe du polissage chimique est aussi différent de celui du décapage chimique, qui s'apparente davantage au procédé d'usinage chimique. En effet, le décapage chimique a pour objectif l'élimination d'une couche d'oxyde, dont l'épaisseur est de l'ordre de quelques microns, sans impacter les caractéristiques dimensionnelles de la pièce et sa rugosité de surface mais permettant de favoriser l'accroche du traitement de surface appliqué ultérieurement.

Une différence peut également être notée par rapport aux étapes de dégraissage/décontamination chimique, dont le but est de solubiliser des espèces chimiques adsorbées en surface du matériau à traiter. Aucun impact sur les caractéristiques dimensionnelles de la pièce n'est observé dans ce dernier cas.

Ainsi, dans le présent texte, on entend par polissage le fait de diminuer la rugosité de surface d'une pièce, en modifiant le moins possible ses dimensions.

Conformément à l'invention, un bain de polissage chimique pour le polissage d'une pièce en aluminium ou en alliage d'aluminium, ou d'une partie de celle-ci, comprend :
- un agent oxydant apte à attaquer l'aluminium, choisi parmi une liste comprenant l'acide nitrique, l'eau oxygénée, le permanganate, ou un de leurs mélanges, à une concentration entre 1,2 et 3,0 mol/L, de préférence entre 1,3 et 2 mol/L, de manière encore plus préférée entre 1,4 et 1,6 mol/L ;
- un agent complexant fluorure apte à former un complexe avec l'aluminium oxydé, à une concentration entre 0,3 et 1,6 mol/L ;

un catalyseur, en particulier du cuivre ; et
de l'acide phosphorique à une concentration entre 10,10 et 14,30 mol/L (soit entre 1000 et 1400 g/L) ainsi que de l'acide sulfurique à une concentration entre 1,50 et 3,60 mol/L (soit entre 150 et 350 g/L).

Un des mérites de l'invention est d'avoir identifié des composés, et leurs concentrations respectives, qui permettent un abattement significatif de la rugosité, sans augmenter significativement la décote, alors que ces deux effets nécessitent en général des paramètres antagonistes.

La solution selon l'invention comprend un agent oxydant, qui va venir attaquer la surface de la pièce en aluminium, un agent complexant de l'oxyde l'aluminium. La densité du bain est contrôlée par le mélange d'acide sulfurique et d'acide phosphorique. En effet, afin d'obtenir un effet de polissage, le présent bain présente une viscosité, ou densité, généralement plus importante que celle d'autres solutions d'attaque chimique, par ex. du type usinage chimique. Ainsi, l'agressivité de la présente solution est différente des solutions de décapage ou d'usinage chimique conventionnelles, et ce malgré l'utilisation de réactifs qui peuvent être similaires. Les deux acides utilisés (acide sulfurique et acide phosphorique) ont cependant aussi une fonction d'attaque de la surface de l'aluminium, métal très soluble en milieu acide. Or l'arrivée des ions H⁺, provenant de ces deux acides, près de la surface à polir est aussi limitée par leur diffusion, ce qui permet de contrôler leur fonction d'attaque.

La viscosité plus importante de la solution de polissage permet de ralentir les phénomènes de diffusion des espèces chimiques de la solution vers la surface de la pièce où ceux-ci ont été consommés. L'objectif est de rendre la diffusion plus lente que la cinétique de réaction. La surface s'appauvrit ainsi en agents d'attaque (agent oxydant, acide sulfurique ou acide phosphorique) et en complexants, car ils ont été consommés plus vite qu'ils n'arrivent à la surface. Leur arrivée a donc lieu en premier près des sommets des reliefs des surfaces à polir où leur action sera prioritaire. Alors que les creux ne verront pas autant de réactifs (agents d'attaque et agents complexants), ceux-ci ayant déjà été consommés par une réaction sur les points les plus en relief de la pièce. Ce phénomène est ainsi responsable d'un effet de polissage de la surface par dissolution sélective des aspérités de surface.

Dans le cadre de l'invention, parler d'une augmentation de la viscosité du bain est équivalent à parler d'une augmentation de sa densité, et inversement.

Selon la compréhension actuelle de l'invention, l'efficacité du présent bain de polissage chimique repose sur la maîtrise des cinétiques de diffusion des agents oxydants et des agents complexants au sein du bain vers la surface de la pièce à polir, ainsi que des cinétiques de réaction des agents oxydants avec la surface de la pièce à polir. Le principe d'action du bain de polissage chimique selon l'invention est le suivant. Une viscosité appropriée (accrue par rapport aux bains classiques d'attaque chimique) du bain de polissage chimique permet de ralentir les phénomènes de diffusion des espèces chimiques actives (ici les agents oxydants et les agents complexants) de la solution vers la surface de la pièce. Au voisinage de la surface, les espèces actives sont consommées, ce qui induit un appauvrissement local du bain. Afin de rétablir l'équilibre des concentrations, les espèces actives diffusent depuis le bain vers la surface, et ce faisant elles réagissent dès qu'elles entrent en contact avec la surface à polir. Les zones les plus accessibles étant les sommets des pics à l'origine de la rugosité de surface, l'attaque des sommets est favorisée, ce qui permet une réduction du relief de la surface et donc de la rugosité globale de la pièce.

Des premiers essais ont été réalisés avec le présent bain de polissage, pour des volumes de bain entre 100 mL et 6 L, et ont prouvé son efficacité. Le bain de polissage chimique selon l'invention a été particulièrement développé pour le polissage de pièces issues des techniques de fabrication additive, mais peut être appliqué à toutes sortes de pièces en aluminium ou alliage d'aluminium, quel que soit le procédé d'obtention. En outre, les dimensions et/ou géométries peuvent être très variées. Par ailleurs, la pièce en aluminium à traiter peut être une partie d'un composant. C'est-à-dire que la partie d'aluminium à traiter peut être combinée à un autre matériau, auquel elle est juxtaposée ou superposée.

De manière avantageuse, l'agent complexant fluoré ajouté au bain de polissage chimique est choisi parmi NH₄F,HF, NaF,HF, KF,HF, SiF₆ ou leurs mélanges. Le rôle du complexant fluorure dans l'invention est de venir se combiner à l'aluminium oxydé (Al₂O₃, AlO(OH) ou Al(OH)₃) qui se forme en surface de la pièce sous l'attaque de l'agent oxydant, ou qui peut être en solution.

Les agents complexants inorganiques privilégiés se présentent sous la forme d'un sel fluoré et d'acide fluorhydrique. En d'autres termes, il s'agit d'un acide faible en présence de son anion, l'ion fluorure ou F⁻. Ainsi, l'agent complexant utilisé a également une fonction de tampon, ce qui rend possible le contrôle du pH du bain de polissage chimique.

De plus, les ions fluorures (ou F⁻) sont capables de complexer une variété de métaux, ce qui est intéressant dans le cas de pièces en alliage d'aluminium. Par ailleurs, les fluorures sont des agents complexants extrêmement stables en solution, et le risque qu'ils soient dégradés au cours du temps et forment des sous-produits mal maîtrisés est minime.

Selon les variantes, l'agent complexant fluorure est présent à une concentration entre 0,6 et 1,2 mol/L, de préférence entre 0,8 et 1,1 mol/L.

Selon les variantes, lequel l'agent oxydant est présent à une concentration entre 1,3 et 2 mol/L, de préférence entre 1,4 et 1,6 mol/L.

Selon les variantes, l'acide phosphorique est présent à une concentration entre 11 et 13 mol/L, de préférence entre 11,5 et 12 mol/L, et/ou l'acide sulfurique à une concentration entre 1,6 et 3 mol/L, de préférence entre 1,7 et 2,2 mol/L.

Le cuivre est généralement introduit dans le bain de polissage sous forme de sel soluble afin de favoriser la dispersion du cuivre et une concentration homogène en cuivre dans le bain. En effet, le cuivre est ajouté au bain de polissage chimique car il catalyse l'oxydation de la surface de la pièce en aluminium ou en alliage d'aluminium à polir. En tant que catalyseur, sa consommation est très faible car il est régénéré après sa réaction avec le substrat par l'action de l'acide nitrique.

Le sel de cuivre ajouté est préférentiellement choisi parmi le groupe constitué du sulfate de cuivre, du nitrate de cuivre ou d'un mélange de ceux-ci. De manière avantageuse, le cuivre est ajouté au bain de polissage sous forme de sulfate de cuivre, car les ions sulfate associés au cuivre sont déjà présents dans ledit bain de polissage du fait de l'utilisation d'acide sulfurique, ce qui réduit le risque de réaction parasite lié à l'introduction d'autres éléments dans le milieu de réaction. Le cuivre est préférablement présent à hauteur de 0,10 à 0,20 mol/L.

Au cours de son utilisation, le bain de polissage se charge en aluminium dissout, du fait de l'attaque chimique ayant lieu sur les rugosités de surface. Il est possible de régénérer un tel bain après utilisation par simple ajout des composés consommés au cours du polissage, notamment les agents oxydants et complexants, et dans ce cas le bain régénéré contient toujours de l'aluminium, ce qui est aussi le cas des bains de polissage chimique traditionnels. Cependant les bains traditionnels sont détruits lorsque la concentration en aluminium devient trop élevée. La présence de l'aluminium peut en effet perturber le fonctionnement du bain, et nuire aux performances de polissage, ce qui se traduit notamment par le ralentissement de la cinétique de réaction qui pourrait pénaliser le principe du polissage et la compétition avec la diffusion des réactifs (agents oxydants et agents complexants). Il est donc préférable de définir les concentrations limites admissibles en aluminium ne venant pas dégrader le mécanisme chimique du polissage. De manière avantageuse, l'aluminium est présent à une concentration allant d'environ 1 à 50 g/L soit 0,037 et 1,85 mol/L, de préférence à une concentration allant d'environ 1 à 30 g/L, soit 0,037 et 1,1 mol/L. Ces concentrations en aluminium étant plus faibles que ce qui est traditionnellement observés pour un bain de décapage chimique par exemple, le bain ici utilisé est donc bien un bain de polissage.

Selon les variantes, le bain présente une densité allant de 1,6 à 1,8 g/cm³.

Dans le contexte de l'invention, les plages de concentrations mentionnées doivent être comprises au sens le plus large possible, i.e. en incluant les valeurs limites supérieure et inférieure desdites plages de concentrations. Tel qu'utilisé dans le présent texte, le terme « environ » signifie une plage de valeurs comprises entre ±10% de la valeur indiquée.

Dans un autre aspect, l'invention propose un procédé de polissage chimique d'une pièce en aluminium ou en alliage d'aluminium, ou d'une partie de celle-ci en utilisant le bain de polissage chimique tel que décrit ci-dessus.

Le procédé selon l'invention comprend au moins les étapes suivantes :
- fournir un bain de polissage chimique tel que décrit ci-dessus ;
- immerger une pièce à polir en aluminium ou en alliage d'aluminium, ou une partie de celle-ci, dans le bain de polissage chimique ;
- retirer la pièce du bain après une durée d'immersion prédéterminée.

Afin de maîtriser les concentrations en réactifs, notamment en agent oxydant et en agent complexant, dans le bain de polissage, ces concentrations peuvent être déterminées par dosage. Le dosage des différentes espèces chimiques peut être effectué par un titrage acido-basique en milieu non aqueux, par thermo-titration ou par spectrophotométrie. Alternativement, il est également possible d'effectuer un dosage des différents réactifs par chromatographie ionique ou par spectrométrie d'émission atomique à plasma à couplage inductif (ICP-AES).

La température du bain de polissage lors de l'immersion de la pièce à polir est comprise entre 70°C et 100°C, de préférence entre 80°C et 90°C. La durée d'immersion de la pièce en aluminium ou en alliage d'aluminium dans le bain de polissage est comprise entre 5 et 15 minutes, de préférence comprise entre 7 et 12 minutes, de manière encore plus préférée la durée d'immersion est égale à 10 minutes. La température du bain a une influence sur la cinétique de réaction du procédé de polissage, et notamment sur la vitesse d'attaque de l'aluminium. Plus la température est élevée et plus les agents d'attaque (agent oxydant, acide sulfurique ou acide phosphorique) et complexants agissent rapidement. La différence existant entre la vitesse de réaction des réactifs et leur diffusion est accentuée, ce qui améliore le procédé de polissage et les résultats obtenus, i.e. une diminution de la rugosité de surface tout en limitant la décôte.

Grâce au procédé selon l'invention utilisant le bain de polissage à une certaine température et en immergeant la pièce ou la partie de celle-ci à polir durant un temps particulier, il est possible d'obtenir un abattement significatif de la rugosité de surface de la pièce sans fortement augmenter la décote. Ces deux effets nécessitent en général des paramètres antagonistes : immerger une pièce en aluminium ou en alliage d'aluminium plus longtemps dans le bain de polissage permet de favoriser la diminution de la rugosité mais augmente la décote. De manière surprenante, appliquer une durée d'immersion de 10 minutes permet d'obtenir une rugosité, ou hauteur, moyenne arithmétique le long d'une ligne (Ra) résiduelle inférieure à 5 µm, et même inférieure à 3 ou 2 µm, tout en limitant la décote à une centaine de micromètres. En d'autres termes, dans le présent contexte, la décote observée pour une pièce polie à l'aide d'un bain de polissage chimique ou un procédé de polissage chimique selon l'invention présente une décote inférieure à 300 µm. Le paramètre Sa peut être considéré comme plus pertinent que Ra lorsqu'il s'agit de quantifier la rugosité, ou une diminution de rugosité, d'une surface car il s'agit d'une rugosité moyenne arithmétique mesurée sur une surface et non plus uniquement le long d'une ligne comme Ra. Les pièces en aluminium ou en alliage d'aluminium polies à l'aide d'un bain de polissage chimique selon l'invention, présentent de manière avantageuse un Sa de l'ordre de 1 µm.

Dans le présent texte, l'expression « de l'ordre de 1 µm » signifie comprise entre 1 et 5 µm.

De manière avantageuse, une étape de dégraissage et/ou décapage chimique peut être réalisée sur la surface de la pièce à polir avant l'étape d'immersion de ladite pièce ou de la partie de celle-ci à polir, dans le bain de polissage chimique. Une telle étape de préparation de la surface permet de nettoyer celle-ci et notamment de faciliter l'accès de celle-ci aux agents oxydants et/ou complexants réagissant avec ladite surface lors du processus de polissage chimique, augmentant son efficacité.

Le bain de polissage chimique selon l'invention ou le procédé utilisant un tel bain, sont particulièrement bien adaptés aux alliages d'aluminium.

Le présent bain de polissage chimique ainsi que le présent procédé de polissage ont été notamment développés pour les alliages d'aluminium appartenant aux séries 10000 à 70000, en particulier à la famille d'alliage 40000, plus particulièrement l'alliage d'aluminium est l'alliage AS7G06 de type 42200. Comme on le sait dans le domaine, ces alliages sont particulièrement difficiles à polir du fait de leur forte teneur en silicium (Si) tout en étant largement utilisés notamment dans l'industrie automobile, ce qui augmente l'intérêt du développement d'un tel bain de polissage chimique.

De manière avantageuse, la pièce à polir en totalité ou en partie à l'aide d'un bain de polissage chimique selon l'invention ou du procédé utilisant un tel bain est une pièce en aluminium ou en alliage d'aluminium obtenue par un procédé de fabrication additive, ou impression tridimensionnelle.

Ainsi, le présent bain de polissage chimique ou le présent procédé de polissage chimique trouve particulièrement application pour le traitement de pièces produites pour l'industrie aérospatiale, aéronautique, et automobile, pour éliminer les irrégularités de surface et prévenir ainsi le risque de décollement de particules de la surface desdites pièces en service, qui pourrait générer des problèmes fonctionnels en lien avec leur utilisation tels que l'obturation de canalisations, ou la diminution de leurs propriétés mécaniques statiques et/ou dynamiques.

### Brève description des figures

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
[Fig. 1] des diagrammes représentatifs (points 1 à 6) du principe de fonctionnement du présent procédé ;
[Fig. 2] des images au microscope confocal permettant la comparaison de l'état de surface d'une pièce en alliage d'aluminium AS7G06 avant (a) et après (b) polissage chimique en utilisant une première exécution préférée d'un bain de polissage chimique selon l'invention ; et
[Fig. 3] des images au microscope confocal permettant la comparaison de l'état de surface d'une pièce en alliage d'aluminium AS7G06 avant (a) et après (b) polissage chimique en utilisant une seconde exécution préférée d'un bain de polissage chimique selon l'invention.

### Description détaillée à l'aide d'exemples

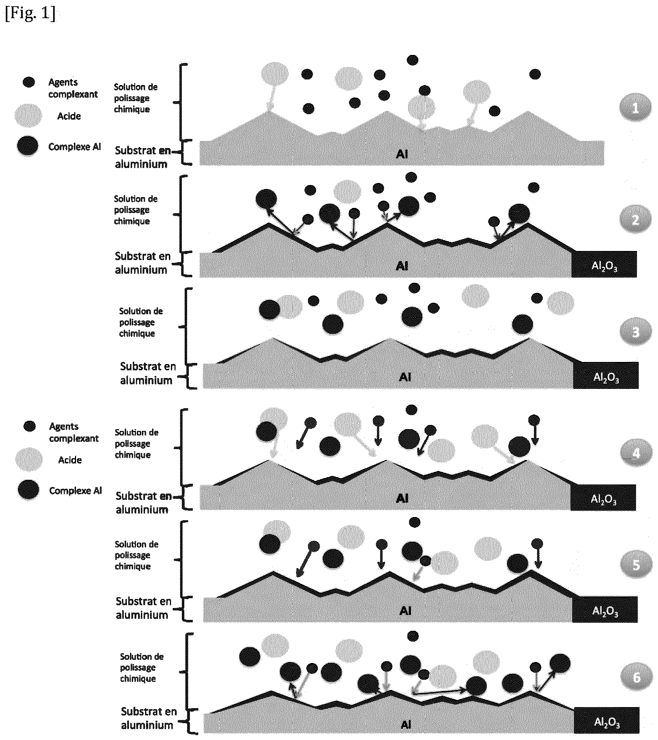

Le principe de fonctionnement du bain de polissage selon l'invention sera tout d'abord expliqué en référence à la figure 1. Comme expliqué précédemment, la présente invention propose, de manière surprenante, un bain de polissage permettant un abattement significatif de la rugosité, sans augmenter la décote, alors que ces deux effets nécessitent en général des paramètres antagonistes.

La viscosité accrue du bain, contrôlée par les acides sulfurique et phosphorique, permet de ralentir les phénomènes de diffusion des espèces chimiques de la solution vers la surface de la pièce. Cet appauvrissement de la surface en espèces actives, du fait de leur consommation au voisinage de la surface, est responsable d'un effet de polissage de la surface par dissolution sélective du relief de surface.

Le principe en est représenté à la Figure 1 :
1) : attaque et oxydation du matériau par l'oxydant en conditions acides et formation d'une première couche de passivation (oxydes métalliques à partir d'aluminium et des éléments d'alliage) ;
2, 3) : complexation des oxydes d'aluminium et des oxydes d'alliage par les agents complexants pour solubiliser les oxydes ;
4, 5) : diffusion lente des composés oxydants depuis la solution vers la surface de l'alliage à polir, l'acide sulfurique et l'acide phosphorique permettant de ralentir l'arrivée des composés oxydants ;
6) : attaque des parties supérieures du relief, entraînant la réduction de la rugosité.

### Exemples :

On décrira ci-dessous deux exemples de polissage de pièces d'aluminium dans deux bains différents, bains 1 et 2, conformes à l'invention, ainsi que deux exemples de traitement de pièces en aluminium dans deux bains différents, bains 3 et 4, non conformes à l'invention(exemples comparatifs).

Quatre pièces en alliage d'aluminium AS7G06 référencées de A à D issues d'un même procédé de fabrication additive se présentent sous la forme d'une plaque de dimensions 60 x 40x 6 mm. La face dite supérieure est la face sur laquelle les couches de matériau sont ajoutées l'une après l'autre au cours du procédé de fabrication, tandis que la face inférieure est la face opposée. Les plaques ont d'abord subi une étape de dégraissage et de décapage chimique à l'acide nitrique afin de préparer leur surface, selon des procédés classiques bien connus de l'homme du métier. Les quatre pièces A à D sont ensuite chacune partiellement recouverte à l'aide d'un ruban autocollant de masquage.

Les pièces en alliage d'aluminium A et B partiellement masquées ainsi obtenues ont ensuite été soumises à des procédés de polissage chimique employant des bains de polissage de compositions différentes référencés 1 et 2, selon deux modes de réalisation préférés mais non limitatifs de l'invention. Les pièces en alliage d'aluminium C et D partiellement masquées ainsi obtenues ont été soumises à des procédés de polissage chimique employant des bains de polissage comparatifs, de compositions différentes et non conformes à la présente invention, référencés 3 et 4. Les quatre bains différents 1 à 4 ont été réalisés dans des cuves similaires, avec des volumes de solution de 4 L ; leurs compositions sont détaillées dans le Tableau 1.

**[Tableau 1]**

| Echantillon | H₂SO₄ g/L | H₃PO₄ g/L | HNO₃ g/L | Aluminium g/L | NH₄F.HF g/L | CuSO₄.5H₂O g/L | T °C | Durée min |
|---|---|---|---|---|---|---|---|---|
| Bain 1 | 180 | 1140 | 100 | 10 | 50 | 25 | 85 | 10 |
| Bain 2 | 300 | 1140 | 100 | 20 | 50 | 50 | 85 | 10 |
| Bain 3 | 180 | 950 | 100 | 10 | 100 | 25 | 85 | 10 |
| Bain 4 | 300 | 1140 | 100 | 10 | 100 | 50 | 85 | 10 |
| Echantillon | H₂SO₄ mol/L | H₃PO₄ mol/L | HNO₃ mol/L | Aluminium mol/L | NH₄F.HF mol/L | CuSO₄.5H₂O mol/L | T °C | Durée min |
| Bain 1 | 1,88 | 11,6 | 1,55 | 0,37 | 0,88 | 0,10 | 85 | 10 |
| Bain 2 | 3,06 | 11,6 | 1,55 | 0,74 | 0,88 | 0,20 | 85 | 10 |
| Bain 3 | 1,88 | 10,0 | 1,55 | 0,37 | 1,76 | 0,10 | 85 | 10 |
| Bain 4 | 3,06 | 11,6 | 1,55 | 0,37 | 1,76 | 0,20 | 85 | 10 |

La pièce en alliage d'aluminium A a été immergée dans le bain 1, la pièce B a été immergée dans le bain 2, la pièce C a été immergée dans le bain 3 et la pièce D a été immergée dans le bain 4. Pour chacune des pièces, la zone recouverte par le ruban autocollant de masquage n'est pas en contact direct avec le bain dans lequel la pièce est immergée et ne subit aucune modification de son état de surface.

Dans le cadre de la présente invention, la viscosité élevée du bain de polissage (typiquement densité de 1,6 à 1,8 g/cm³) et les inhomogénéités locales de concentrations (dues à l'épaisseur de la couche de diffusion) en agent oxydant et en agent complexant étant cruciales pour maîtriser le polissage et favoriser l'attaque chimique des sommets, l'agitation du bain lorsque la pièce à traiter y est immergée est strictement contrôlée. Le bain est préférablement agité avec une vitesse d'agitation plus faible lorsque la pièce à polir est immergée (phase de traitement) que lors de la préparation du bain de polissage (phase d'homogénéisation). Cette vitesse d'agitation est typiquement comprise entre 5 et 10 L/min lors de la phase de traitement et aux alentours de 100 L/min lors des phases d'homogénéisation. Ces valeurs de vitesse d'agitation sont données à titre d'exemple uniquement et ne constituent pas une limitation de la présente invention. En particulier, la vitesse d'agitation influençant le renouvellement des espèces chimiques présentes dans la couche de liquide, appelée couche de diffusion, au voisinage de la pièce à traiter, une vitesse d'agitation plus faible permet la formation d'une couche de diffusion plus épaisse, ce qui ralentit la diffusion des réactifs et favorise le polissage.

Après immersion dans le bain de polissage, la pièce traitée est rincée puis observée au microscope confocal afin de déterminer la diminution de sa rugosité et sa décote. En particulier, pour chacune des pièces, le ruban autocollant de masquage est retiré et une zone comprenant une surface traitée et une surface non traitée (car précédemment masquée par le ruban autocollant de masquage) est observée à l'aide d'un microscope Olympus DSX510. La topographie de chacune des surfaces est enregistrée et analysée afin de déterminer la décote due à l'enlèvement de matière et les variations des paramètres de rugosité dus à l'effet polissant des différents bains.

Les rugosités de surface obtenues après fabrication (surface non traitée) et à l'issu du polissage chimique (surface traitée) pour les pièces en alliage d'aluminium A à D, ainsi que la décote des pièces ayant eu lieu au cours de ce polissage sont reportées au Tableau 2. Dans celui-ci, l'expression avant polissage se réfère à la partie de la surface ayant été masquée par le ruban autocollant de masquage au cours de l'immersion dans le bain, tandis que l'expression après polissage se réfère à la partie de la surface non masquée par le ruban et soumise au traitement de polissage chimique.

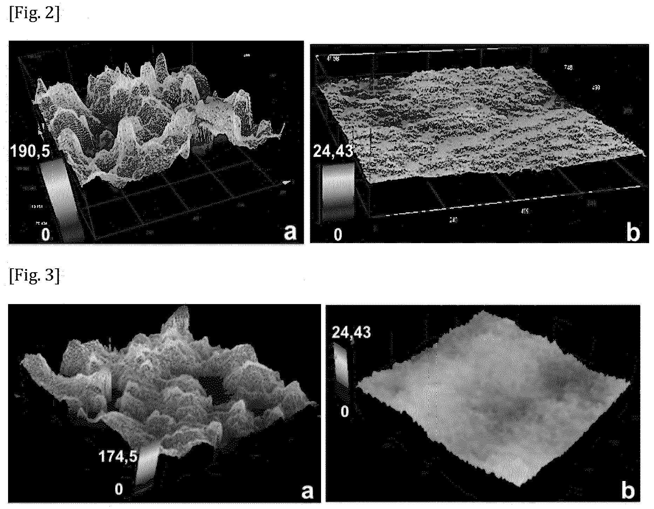

Comme on peut le voir dans le Tableau 2 ainsi que sur les Fig.2a et Fig.3a, les pièces A à D obtenues par le procédé de fabrication additive présentent un état de surface similaire avant polissage.

Après polissage, les pièces A à D ont toutes subi une décote de chacune de leurs faces (Tableau 2). Les Fig.2b et Fig.3b ainsi que le Tableau 2 indiquent une forte diminution du relief de surface des pièces traitées par les deux bains selon l'invention, et donc un polissage des pièces A et B. Il est à noter que parmi les deux pièces traitées à l'aide d'un bain selon l'invention, la pièce B présente une décote plus importante que la pièce A (Tableau 2), qui peut être liée à une concentration en catalyseur doublée entre le bain 2 et le bain 1. Le catalyseur favorise en effet l'attaque chimique et donc la décote.

**[Tableau 2]**

| Pièces traités à l'aide d'un bain selon l'invention | Pièce A - Face supérieure | | Pièce A - Face inférieure | | Pièce B - Face supérieure | | Pièce B - Face inférieure | |
|---|---|---|---|---|---|---|---|---|
| | Avant polissage | Après polissage | Avant polissage | Après polissage | Avant polissage | Après polissage | Avant polissage | Après polissage |
| Ra µm | 22,65 | 0,99 | 18,11 | 1,13 | 19,22 | 2,17 | 19,31 | 2,75 |
| Rz µm | 151,47 | 5,9 | 137,74 | 6,83 | 124,88 | 15,35 | 117,12 | 20,69 |
| Sa µm | 17,10 | 1,21 | 15,17 | 1,40 | 18,42 | 1,72 | 17,20 | 2,03 |
| Décote µm | 187,4 | | 174,9 | | 283,1 | | 234,7 | |

| Pièces traitées à l'aide d'un bain comparatif | Pièce C - Face supérieure | | Pièce C - Face inférieure | | Pièce D - Face supérieure | | Pièce D - Face inférieure | |
|---|---|---|---|---|---|---|---|---|
| | Avant polissage | Après polissage | Avant polissage | Après polissage | Avant polissage | Après polissage | Avant polissage | Après polissage |
| Ra µm | 18,55 | 7,58 | 17,93 | 6,66 | 23,90 | 37,77 | 19,70 | 28,32 |
| Rz µm | 179,37 | 43,73 | 144,93 | 48,70 | 156,80 | 220,42 | 170,56 | 186,74 |
| Sa µm | 18,01 | 4,22 | 14,52 | 4,17 | 19,86 | 29,07 | 17,02 | 25,35 |
| Décote µm | 397 | | 314 | | 70,6 | | 9,3 | |

En comparant les résultats obtenus à l'aide du bain 2 (selon l'invention) et du bain 4 (exemple comparatif), on remarque qu'augmenter la concentration en agent complexant permet de diminuer significativement la décote. En effet, elle est de seulement 9,3 µm pour la face inférieure de la pièce D contre 234,7 µm pour la face inférieure de la pièce B. Cependant, la rugosité de surface de la pièce D n'a pas diminué au cours du traitement dans le bain 4, elle est au contraire supérieure après traitement à ce qu'elle était avant traitement (Tableau 2). Il n'y a pas d'effet de polissage.

En comparant les résultats obtenus à l'aide du bain 1 (selon l'invention) et du bain 3 (exemple comparatif), on remarque qu'augmenter la concentration en agent complexant tout en diminuant la concentration en acide phosphorique permet d'obtenir une diminution significative de la rugosité de surface de la pièce traitée (Tableau 2). Cependant, la décote de chacune des faces de la pièce C traitée par le bain 3 (exemple comparatif) est près de deux fois supérieure à celle des faces de la pièce A traitée par le bain 1 (selon l'invention). Le bain 3 est un bain d'usinage chimique et non pas un bain de polissage chimique.

## Revendications

1. Bain de polissage chimique pour le polissage d'une pièce en aluminium ou en alliage d'aluminium, ou d'une partie de celle-ci, ledit bain de polissage chimique comprenant :
- un agent oxydant apte à attaquer l'aluminium, choisi parmi l'acide nitrique, l'eau oxygénée, le permanganate, ou un de leurs mélanges, à une concentration entre 1,2 et 3,0 mol/L ;
- un agent complexant fluorure apte à former un complexe avec l'aluminium oxydé, à une concentration entre 0,3 et 1,6 mol/L ;
- un catalyseur, en particulier du cuivre ; et
- de l'acide phosphorique à une concentration entre 10,10 et 14,30 mol/L ainsi que de l'acide sulfurique à une concentration entre 1,50 et 3,60 mol/L.

2. Bain de polissage chimique selon la revendication 1, dans lequel l'agent complexant fluorure est ajouté au bain sous forme de NH₄F.HF, NaF.HF, KF.HF, SiF₆ ou leurs mélanges.

3. Bain de polissage chimique selon la revendication 1 ou 2, dans lequel l'agent complexant fluorure est présent à une concentration entre 0,6 et 1,2 mol/L, de préférence entre 0,8 et 1,1 mol/L.

4. Bain de polissage chimique selon l'une quelconque des revendications précédentes, dans lequel l'agent oxydant est présent à une concentration entre 1,3 et 2 mol/L, de préférence entre 1,4 et 1,6 mol/L.

5. Bain de polissage chimique selon l'une quelconque des revendications précédentes, dans lequel l'acide phosphorique est présent à une concentration entre 11 et 13 mol/L, de préférence entre 11,5 et 12 mol/L, et/ou l'acide sulfurique à une concentration entre 1,6 et 3 mol/L, de préférence entre 1,7 et 2,2 mol/L.

6. Bain de polissage chimique selon l'une quelconque des revendications précédentes, dans lequel le cuivre est présent à hauteur de 0,10 à 0,20 mol/L ; et de préférence ajouté au bain sous forme d'un sel de cuivre, le sel de cuivre étant choisi parmi un groupe composé du sulfate de cuivre, du nitrate de cuivre ou leurs mélanges.

7. Bain de polissage chimique selon l'une quelconque des revendications précédentes, comprenant de l'aluminium, présent à une concentration allant d'environ 1 à 50 g/L soit entre 0,037 et 1,85 mol/L, de préférence à une concentration allant d'environ 1 à 30 g/L soit entre 0,037 et 1,1 mol/L,

8. Bain de polissage chimique selon l'une quelconque des revendications précédentes, ledit bain présentant une densité allant de 1,6 à 1,8 g/cm³.

9. Procédé de polissage chimique pour le polissage d'une pièce en aluminium ou en alliage d'aluminium, ou d'une partie de celle-ci, comprenant les étapes suivantes
(i) fournir un bain de polissage chimique selon l'une quelconque des revendications précédentes ;
(ii) immerger une pièce à polir en aluminium ou en alliage d'aluminium, ou une partie de celle-ci, dans le bain de polissage chimique, lequel est préférablement maintenu à une température comprise entre 70°C et 100°C, en particulier entre 80°C et 90°C ;
(iii) retrait de la pièce après une durée d'immersion prédéterminée.

10. Procédé de polissage chimique selon la revendication 9, dans lequel la durée d'immersion est comprise entre 5 et 15 minutes, de préférence comprise entre 7 et 12 minutes, de manière encore plus préférée la durée d'immersion est égale à 10 minutes.

11. Procédé de polissage chimique selon la revendication 9 ou 10, dans lequel pendant l'immersion le bain est agité, de préférence avec une vitesse d'agitation comprise entre 5 et 10 L/min.

12. Procédé de polissage chimique selon la revendication 9, 10 ou 11, dans lequel la pièce en aluminium ou en alliage d'aluminium, ou la partie de celle-ci, à polir est soumise à une étape de dégraissage et/ou décapage chimique avant d'être immergée dans le bain de polissage chimique.

13. Bain de polissage chimique selon l'une des revendications 1 à 8, ou procédé de polissage chimique selon l'une des revendications 9 à 12, dans lequel la pièce à polir, ou la partie de celle-ci, est en alliage d'aluminium appartenant aux séries 10000 à 70000, en particulier à la famille d'alliage 40000, plus particulièrement l'alliage d'aluminium est l'alliage AS7G06 de type 42200.

14. Bain de polissage chimique selon l'une des revendications 1 à 8, ou procédé de polissage chimique selon l'une des revendications 9 à 12, dans lequel la pièce en aluminium ou en alliage d'aluminium à polir est obtenue par un procédé de fabrication additive.

## Patentansprüche

1. Chemisches Polierbad zum Polieren eines Werkstücks aus Aluminium oder aus Aluminiumlegierung, oder eines Teils eines solchen, wobei das chemische Polierbad Folgendes umfasst:
- ein Oxidationsmittel, das dazu befähigt ist, Aluminium anzugreifen, wobei es aus Salpetersäure, Wasserstoffperoxid, Permanganat oder einer von deren Mischungen ausgewählt ist, in einer Konzentration von 1,2 bis 3,0 mol/L;
- ein Fluorid-Komplexierungsmittel, das dazu befähigt ist, einen Komplex mit dem oxidierten Aluminium zu bilden, in einer Konzentration von 0,3 bis 1,6 mol/L;
- einen Katalysator, bei dem es sich insbesondere um Kupfer handelt; und
- Phosphorsäure in einer Konzentration von 10,10 bis 14,30 mol/L sowie Schwefelsäure in einer Konzentration von 1,50 bis 3,60 mol/L.

2. Chemisches Polierbad nach Anspruch 1, wobei das Fluorid-Komplexierungsmittel dem Bad in Form von NH₄F.HF, NaF.HF, KF.HF, SiF₆ oder deren Mischungen zugesetzt wird.

3. Chemisches Polierbad nach Anspruch 1 oder 2, wobei das Fluorid-Komplexierungsmittel in einer Konzentration von 0,6 bis 1,2 mol/L, vorzugsweise von 0,8 bis 1,1 mol/L, vorliegt.

4. Chemisches Polierbad nach einem beliebigen der vorhergehenden Ansprüche, wobei das Oxidationsmittel in einer Konzentration von 1,3 bis 2 mol/L, vorzugsweise von 1,4 bis 1,6 mol/L, vorliegt.

5. Chemisches Polierbad nach einem beliebigen der vorhergehenden Ansprüche, wobei die Phosphorsäure in einer Konzentration von 11 bis 13 mol/L, vorzugsweise von 11,5 bis 12 mol/L, vorliegt und/oder die Schwefelsäure in einer Konzentration von 1,6 bis 3 mol/L, vorzugsweise von 1,7 bis 2,2 mol/L, vorliegt.

6. Chemisches Polierbad nach einem beliebigen der vorhergehenden Ansprüche, wobei das Kupfer zu 0,10 bis 0,20 mol/L vorliegt; und es dem Bad vorzugsweise in Form eines Kupfersalzes zugesetzt wird, wobei das Kupfersalz aus einer Gruppe ausgewählt ist, die sich aus Kupfersulfat, Kupfernitrat oder deren Mischungen zusammensetzt.

7. Chemisches Polierbad nach einem beliebigen der vorhergehenden Ansprüche, wobei es Aluminium umfasst, das in einer Konzentration im Bereich von ungefähr 1 bis 50 g/L, entsprechend zwischen 0,037 und 1,85 mol/L, vorzugsweise in einer Konzentration im Bereich von ungefähr 1 bis 30 g/L, entsprechend zwischen 0,037 und 1,1 mol/L, vorliegt.

8. Chemisches Polierbad nach einem beliebigen der vorhergehenden Ansprüche, wobei das Bad eine Dichte im Bereich von 1,6 bis 1,8 g/cm³ aufweist.

9. Chemisches Polierverfahren zum Polieren eines Werkstücks aus Aluminium oder aus Aluminiumlegierung, oder eines Teils eines solchen, wobei es die folgenden Schritte umfasst:
(i) Bereitstellen eines chemischen Polierbades nach einem beliebigen der vorhergehenden Ansprüche;
(ii) Eintauchen eines zu polierenden Werkstücks aus Aluminium oder aus Aluminiumlegierung, oder eines Teils eines solchen, in das chemische Polierbad, welches vorzugsweise bei einer Temperatur im Bereich von 70 °C bis 100 °C, insbesondere von 80 °C bis 90 °C, gehalten wird;
(iii) Entnehmen des Werkstücks nach einer vorbestimmten Eintauchdauer.

10. Chemisches Polierverfahren nach Anspruch 9, wobei die Eintauchdauer im Bereich von 5 bis 15 Minuten, vorzugsweise im Bereich von 7 bis 12 Minuten liegt, wobei die Eintauchdauer mit noch größerem Vorzug 10 Minuten beträgt.

11. Chemisches Polierverfahren nach Anspruch 9 oder 10, wobei das Bad während des Eintauchens gerührt wird, vorzugsweise mit einer Rührgeschwindigkeit im Bereich von 5 bis 10 L/min.

12. Chemisches Polierverfahren nach Anspruch 9, 10 oder 11, wobei das zu polierende Werkstück aus Aluminium oder aus Aluminiumlegierung, oder das Teil eines solchen, einem Schritt des Entfettens und/oder chemischen Beizens unterzogen wird, bevor es in das chemische Polierbad eingetaucht wird.

13. Chemisches Polierbad nach einem der Ansprüche 1 bis 8, oder chemisches Polierverfahren nach einem der Ansprüche 9 bis 12, wobei das zu polierende Werkstück, oder das Teil eines solchen, aus einer Aluminiumlegierung ist, welche den Serien 10000 bis 70000 angehört, besonders der Legierungsfamilie 40000, wobei es sich bei der Aluminiumlegierung insbesondere um die Legierung AS7G06 des Typs 42200 handelt.

14. Chemisches Polierbad nach einem der Ansprüche 1 bis 8, oder chemisches Polierverfahren nach einem der Ansprüche 9 bis 12, wobei das zu polierende Werkstück aus Aluminium oder aus Aluminiumlegierung mittels eines additiven Fertigungsverfahrens erhalten wird.

## Claims

1. A chemical polishing bath for polishing an aluminum or aluminum alloy component, or a part thereof, said chemical polishing bath comprising:
- an oxidizing agent capable of attacking aluminum selected from nitric acid, hydrogen peroxide, permanganate, or one of the mixtures thereof, at a concentration of between 1.2 and 3.0 mol/L;
- a fluoride complexing agent capable of forming a complex with oxidized aluminum at a concentration of between 0.3 and 1.6 mol/L;
- a catalyst, in particular copper; and
- phosphoric acid at a concentration of between 10.10 and 14.30 mol/L together with sulfuric acid at a concentration of between 1.50 and 3.60 mol/L.

2. The chemical polishing bath as claimed in claim 1, wherein the fluoride complexing agent is added to the bath in the form of NH₄F.HF, NaF·HF, KF HF, SiF₆ or mixtures thereof.

3. The chemical polishing bath as claimed in claim 1 or 2, wherein the fluoride complexing agent is present at a concentration of between 0.6 and 1.2 mol/L, preferably between 0.8 and 1.1 mol/L.

4. The chemical polishing bath as claimed in any one of the preceding claims, wherein the oxidizing agent is present at a concentration of between 1.3 and 2 mol/L, preferably between 1.4 and 1.6 mol/L.

5. The chemical polishing bath as claimed in any one of the preceding claims, wherein the phosphoric acid is present at a concentration of between 11 and 13 mol/L, preferably between 11.5 and 12 mol/L, and/or the sulfuric acid at a concentration of between 1.6 and 3 mol/L, preferably between 1.7 and 2.2 mol/L.

6. The chemical polishing bath as claimed in any one of the preceding claims, wherein the copper is present in an amount of 0.10 to 0.20 mol/L, and is preferably added to the bath in the form of a copper salt, the copper salt being selected from a group composed of copper sulfate, copper nitrate or mixtures thereof.

7. The chemical polishing bath as claimed in any one of the preceding claims comprising aluminum, present at a concentration ranging from approximately 1 to 50 g/L, namely between 0.037 and 1.85 mol/L, preferably at a concentration of ranging from approximately 1 to 30 g/L, namely between 0.037 and 1.1 mol/L.

8. The chemical polishing bath as claimed in any one of the preceding claims, said bath having a density of from 1.6 to 1.8 g/cm³.

9. A chemical polishing method for polishing an aluminum or aluminum alloy component, or a part thereof, comprising the following steps:
i) providing a chemical polishing bath as claimed in any one of the preceding claims;
ii) immersing an aluminum or aluminum alloy component to be polished, or a part thereof in the chemical polishing bath which is preferably maintained at a temperature of between 70°C and 100°C, in particular between 80°C and 90°C;
iii) removing the component after a predetermined immersion time.

10. The chemical polishing method as claimed in claim 9, wherein the immersion time is between 5 and 15 minutes, preferably between 7 and 12 minutes, still more preferably the immersion time is equal to 10 minutes.

11. The chemical polishing method as claimed in claim 9 or 10, wherein the bath is agitated, preferably at an agitation rate of between 5 and 10 L/min, during the immersion.

12. The chemical polishing method as claimed in claim 9, 10 or 11, wherein the aluminum or aluminum alloy component, or the part thereof, to be polished is subjected to a chemical degreasing and/or pickling step before being immersed in the chemical polishing bath.

13. The chemical polishing bath as claimed in any one of claims 1 to 8, or chemical polishing method as claimed in any one of claims 9 to 12, wherein the component to be polished, or the part thereof, is made of aluminum alloy belonging to the 10000 to 70000 series, in particular to the 40000 alloy family, more particularly the aluminum alloy is alloy AS7G06 of type 42200.

14. The chemical polishing bath as claimed in any one of claims 1 to 8, or chemical polishing method as claimed in any one of claims 9 to 12, in which the aluminum or aluminum alloy component to be polished is obtained by an additive manufacturing method.
